# EUROPEAN PATENT APPLICATION

(11) **EP 4 151 968 A1**
(43) Date of publication of application: **22.03.2023**
(21) Application number: 20935969.4
(22) Date of filing: 14.10.2020
(51) Int. Cl.: G01J 5/00, G01K 13/00, G06K 9/00, G06N 3/04, G06N 3/08

(54) **METHOD AND APPARATUS FOR MEASURING TEMPERATURE, ELECTRONIC DEVICE, AND COMPUTER-READABLE STORAGE MEDIUM**

(30) Priority: 15.05.2020 CN 202010415405
(71) Applicant: BEIJING BAIDU NETCOM SCIENCE TECHNOLOGY CO., LTD., Beijing 100085 (CN)
(72) Inventor: FENG, Haocheng, Beijing 100085 (CN); YUE, Haixiao, Beijing 100085 (CN); WANG, Keyao, Beijing 100085 (CN); ZHANG, Gang, Beijing 100085 (CN); FAN, Yanwen, Beijing 100085 (CN); YU, Xiyu, Beijing 100085 (CN); HAN, Junyu, Beijing 100085 (CN); LIU, Jingtuo, Beijing 100085 (CN); DING, Errui, Beijing 100085 (CN); WANG, Haifeng, Beijing 100085 (CN)
(74) Representative: advotec.
(86) International application number: PCT/CN2020/120964
(87) International publication number: WO 2021/227350

(57) **Abstract**

A method (300) and an apparatus (600) for measuring temperature, an electronic device and a computer-readable storage medium, which relate to the field of artificial intelligence, and specifically relate to computer vision. The method (300) comprises: detecting a target part of an object in an input image (110, 210) (302); determining a key point (420) of the target part and weight information of the key point (420) on the basis of the detection result (410) of the target part, the weight information indicating the probability of the key point (420) being blocked (304); acquiring temperature information of the key point (420) (306); and determining the temperature of the target part at least on the basis of the temperature information and the weight information of the key point (420) (308). According to the method, body temperature information of a pedestrian can be acquired quickly, efficiently and at a low cost, thereby reducing time and labor costs for temperature measurement.

## Description

This application claims a priority to Chinese patent application No. 202010415405.7, filed on May 05, 2020.

### TECHNICAL FIELD

Embodiments of the present disclosure relates to the field of artificial intelligence, especially to computer vision, and in particular to a method and an apparatus for measuring temperature, an electronic device and a computer-readable storage medium.

### BACKGROUND

High-density flow of people generally appears at an entrance of public transport or an entrance of a scenic spot or a venue with the development of economy and transportation construction in China. Due to the possible and long-term epidemic situation of infectious diseases, temperature measurement and recognition of identity information for the high-density flow of people are important links in epidemic prevention and control. However, the existing non-contact temperature measurement method is usually that security and epidemic prevention personnel detect a temperature of pedestrians one by one through thermometers, and recognize an identity of the pedestrians one by one through scanning ID cards and other ways. The method is obviously inefficient. Moreover, due to the possible congestion of the flow of people, gathering of the high-density flow of people is generally inevitable, thus causing more people to be infected. How to effectively and accurately measure the temperature is an urgent problem for the epidemic prevention and control.

### SUMMARY

According to embodiments of the present disclosure, a solution for measuring temperature is provided.

In a first aspect of the present disclosure, a method for measuring temperature is provided. The method includes detecting a target position of an object in an input image. The method further includes determining key points of the target position and weight information of each key point based on a detection result of the target position, in which the weight information is configured to indicate a probability of each key point being covered. The method may further include acquiring temperature information of each key point. In addition, the method may further include determining a temperature of the target position at least based on the temperature information and the weight information of each key point.

In a second aspect of the present disclosure, an apparatus for measuring temperature is provided. The apparatus includes a target position detection module, configured to detect a target position of an object in an input image; a key point information determination module, configured to determine key points of the target position and weight information of each key point based on a detection result of the target position, in which the weight information is configured to indicate a probability of each key point being covered; a temperature information acquisition module, configured to acquire temperature information of each key point; and a temperature determination module, configured to determine a temperature of the target position at least based on the temperature information and the weight information of each key point.

In a third aspect of the present disclosure, an electronic device is provided. The electronic device includes one or more processors; and a memory configured to store one or more programs. When the one or more programs are executed by the one or more processors, the one or more processors are enabled to implement the method according to the first aspect of the present disclosure.

In a fourth aspect of the present disclosure, a computer-readable storage medium having a computer program stored thereon is provided. The program is caused to implement the method according to the first aspect of the present disclosure when executed by a processor.

In a fifth aspect of the present disclosure, a system for measuring temperature is provided. The system includes an image acquisition module, configured to provide an input image associated with a target position of an object; a computing module communicatively coupled with the image acquisition module, configured to implement the method according to the first aspect of the present disclosure; and an output display module, configured to display a processing result of the computing module.

It should be understood that, the contents described in the Summary are not intended to identify key or important features of embodiments of the disclosure, nor is it intended to limit the scope of the disclosure. Other features of the disclosure will become apparent from the following description.

### BRIEF DESCRIPTION OF THE DRAWINGS

The above and other features, advantages and aspects of respective embodiments of the disclosure will become more apparent with reference to accompanying drawings and following detailed illustrations. In the accompanying drawings, the same or similar numeral references represent the same or similar elements, in which:
FIG. 1 is a schematic diagram illustrating an example environment in which a plurality of embodiments of the present disclosure can be implemented.
FIG. 2 is a schematic diagram illustrating a detailed example environment in which a plurality of embodiments of the present disclosure can be implemented.
FIG. 3 is a flowchart illustrating a process for measuring temperature according to an embodiment of the present disclosure.
FIG. 4 is a schematic diagram illustrating a process of determining key points and weight information thereof based on a detection result according to an embodiment of the present disclosure.
FIG. 5 is a block diagram illustrating a system for measuring temperature according to an embodiment of the present disclosure.
FIG. 6 is a block diagram illustrating an apparatus for measuring temperature according to an embodiment of the present disclosure.
FIG. 7 is a block diagram illustrating a computing device capable of implementing a plurality of embodiments of the present disclosure.

### DETAILED DESCRIPTION

Embodiments of the disclosure will be described in more detail below with reference to the accompanying drawings. Although certain embodiments of the disclosure are illustrated in the accompanying drawings, it should be understood that the disclosure may be implemented in various manners without being limited by the embodiments elaborated herein. On the contrary, embodiments are provided to make the disclosure more thorough and complete. It should be understood that, the accompanying drawings and embodiments of the disclosure are merely used for exemplary purposes, and are not used to limit the protection scope of the disclosure.

In the description of embodiments of the disclosure, the term "includes" and its equivalents should be understood as an open "include" (a non-exclusive "include"), that is, "include but not limited to". The term "based on" should be understood as "based at least in part (at least partially based on)". The term "an embodiment" or "the embodiment" should be understood as "at least one embodiment". The terms "first", "second", and the like may refer to different or the same objects. Other explicit and implicit definitions may also be included below.

In order to deal with epidemic prevention and control, it may generally measure temperatures of a plurality of pedestrians simultaneously using a non-contact and automated temperature measurement method based on a thermal imaging technology. For example, an infrared thermal imaging image of a face of a pedestrian may be acquired through an infrared thermal imaging device. When the infrared thermal imaging image shows that the face of the pedestrian is in a high temperature state (for example, a forehead is displayed in red), a detection device may determine that the pedestrian is in a fever state and send an alarm message.

However, temperature measurement accuracy of this type of temperature measurement technology is easily influenced by surrounding environments. For example, the surrounding of the face of the pedestrian may be covered by a high-temperature object (such as a mobile phone, or a hot drink, etc.). For another example, the surrounding of the face of the pedestrian may be covered by a low-temperature object (such as cold food, a cold drink, etc.). For yet another example, a face of one fever free pedestrian may be covered by a fever pedestrian. These cover conditions generally lead to false temperature alarm, thus affecting performance of the detection device. In addition, when the face is covered, traditional face recognition mechanisms may output an inaccurate recognition result, also.

As mentioned above, there is an urgent need for a method of measuring temperature to acquire temperature information of the pedestrians quickly, effectively and at low-costly, thus reducing time and labor costs of temperature measurement.

According to an embodiment of the present disclosure, a solution for measuring temperature is proposed. In this solution, key points of a target position of an object may be determined based on an input image acquired by a camera, and weight information of each key point may be further determined. Herein, the weight information is configured to indicate a probability of each key point being covered. On the other hand, temperature information at each key point may be acquired by a temperature sensing device, such as an infrared thermal imaging device, and a temperature of the target position may be determined based on the temperature information and the weight information of each key point. In this way, even if there is a situation such as the target position of a face of a person is covered by a high-temperature object (such as a mobile phone, a hot drink, etc.), the weight information of each key point of the covered position may be determined to be very small or may be ignored. Therefore, a temperature of a pedestrian may be determined more based on temperatures of positions that are not covered or are not affected by other abnormal temperatures.

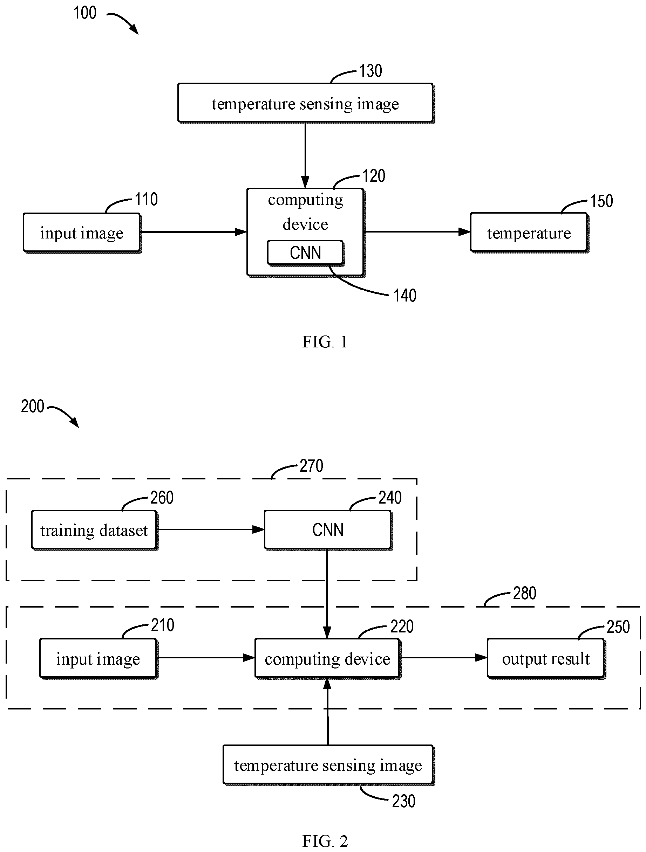

Description will be made in detail below to embodiments of the disclosure with reference to accompanying drawings. FIG. 1 is a schematic diagram illustrating an example environment 100 in which a plurality of embodiments of the present disclosure can be implemented. As illustrated in FIG. 1, the example environment 100 may include an input image 110, a computing device 120, a temperature sensing image 130 and a temperature 150 for output. In addition, the computing device 110 further includes a convolutional neural network (CNN) 140. It is understood that CNN 140 in FIG. 1 is illustrative and may be replaced by other artificial intelligence networks with learning functions.

The input image 110 may be a real-time monitoring image acquired by an image acquisition device connected to the computing device 120. As an example, the image acquisition device may be arranged in a public place with a high flow of people to acquire image information of each person in the crowd passing through the place. It may be understood that acquiring the object from the image information may not be limited to persons, but also include animals that require to measure their temperature in batches (for example, animals in a zoo or a feeding station). In addition, the input image 110 may also be multiple frames of images of a monitored object, namely, a video. The computing device 120 may receive the input image 110, and determine a detection region for the target position, such as a face, of the monitored object through the CNN 140 in the computing device 110, and further determine the key points and the weight information of each key point.

On the other hand, the computing device 120 also receives a temperature sensing image 130. The temperature sensing image 130 may be acquired by a temperature sensing device, such as an infrared thermal imaging device. The temperature sensing device such as the infrared thermal imaging device may register with the image acquisition device described above, to achieve pixel-level alignment of imaging of the two devices. Thus, the computing device 120 may determine the temperature information of each key point, and determine a temperature 150 of the monitored object based on the temperature information of each key point with more reference significance by means such as weighted average.

In FIG. 1, the key to generating the temperature 150 based on the input image 110 and the temperature sensing image 130 is that the CNN 140 in the computing device 110 is constructed through pre-training. Construction and usage of the CNN 140 will be described below through FIG. 2.

FIG. 2 is a schematic diagram illustrating a detailed example environment in which a plurality of embodiments of the present disclosure can be implemented. Similar to FIG. 1, an example environment 200 may include a computing device 220, an input image 210, and an output result 250. The difference from FIG. 1 is that the example environment 200 may generally include a model training system 270 and a model application system 280. As an example, the model training system 270 and/or the model application system 280 may be implemented in a computing device 120 illustrated in FIG. 1 or the computing device 220 illustrated in FIG. 2. It may be understood that the structure and functions of the example environment 200 is described for illustrative purposes only, but is not intended to limit the scope of the subject described in the disclosure. The subject described in the disclosure may be implemented in different structures and/or functions.

As mentioned above, a process of determining a detection region for a target position, such as a face, of a monitored object, and a process of determining key points and weight information of each key point each may be divided into two phases including a model training stage and a model application stage. As an example, for the process of determining the detection region for the target position, in the model training phase, the model training system 270 may train a CNN 240 for determining the detection region through a training dataset 260. In the model application phase, the model application system 280 may receive a trained CNN 240, such that the CNN 240 may determine the detection region based on the input image 210. It may be understood that the training dataset 260 may be a mass of labeled monitoring images.

As another example, for the process of determining the key points and the weight information of each key point, in the model training phase, the model training system 270 may train a CNN 240 for determining the key points and the weight information of each key point through the training dataset 260. In the model application phase, the model application system 280 may receive a trained CNN 240, such that the CNN 240 may determine the key points and the weight information of each key point based on the determined detection region. It may be understood that the CNN 240 may also be trained to determine the key points and the weight information of each key point directly based on the input image 110.

In other embodiments, the CNN 240 may be constructed as a learning network for determining the key points and the weight information of each key point. Such a learning network may also be called a learning model, or simply a network or a model. In some embodiments, the learning network for determining the key points and the weight information of each key point may include a plurality of networks. Each network may be a multi-layer neural network, which may be composed of a large number of neurons. Through the training process, corresponding parameters of the neurons in each network may be determined. The parameters of the neurons in these networks are collectively referred to as parameters of the CNN 240.

A training process of the CNN 240 may be performed in an iterative manner. Specifically, the model training system 270 may acquire a reference image from the training dataset 260, and perform one iteration of the training process using the reference image to update the corresponding parameters of the CNN 240. The model training system 270 may repeat the above process based on a plurality of reference images in the training dataset 260 until at least some of the parameters of the CNN 240 converge, thus acquiring final parameters of the model.

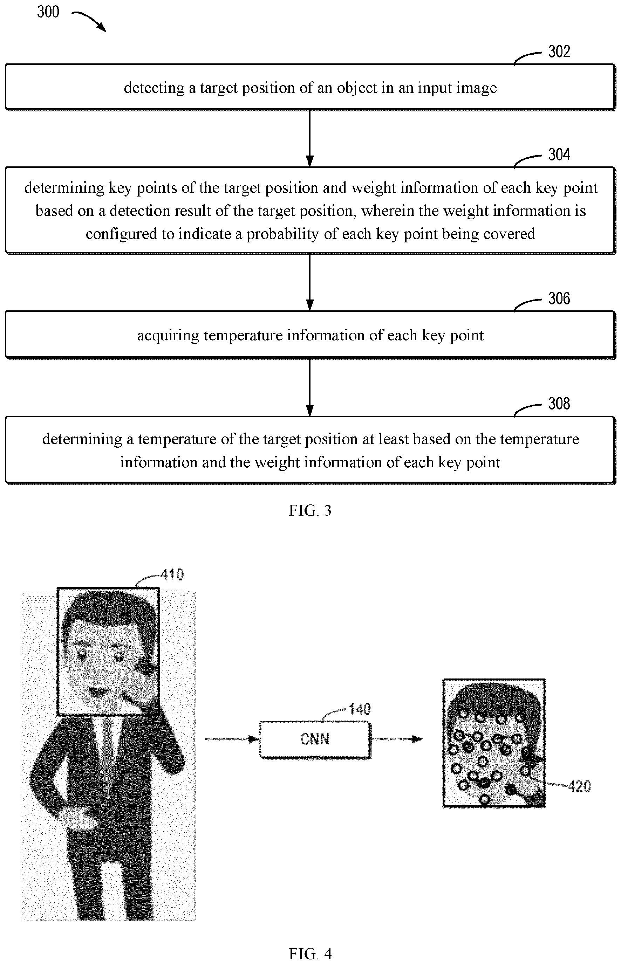

The technical solution described above is only for illustrative purposes only not to limit the present disclosure. It may be understood that each network may also be arranged in other ways and connection relationships. In order to explain the principle of the above solution more clearly, the process of measuring temperature will be described in detail below with reference to FIG. 3.

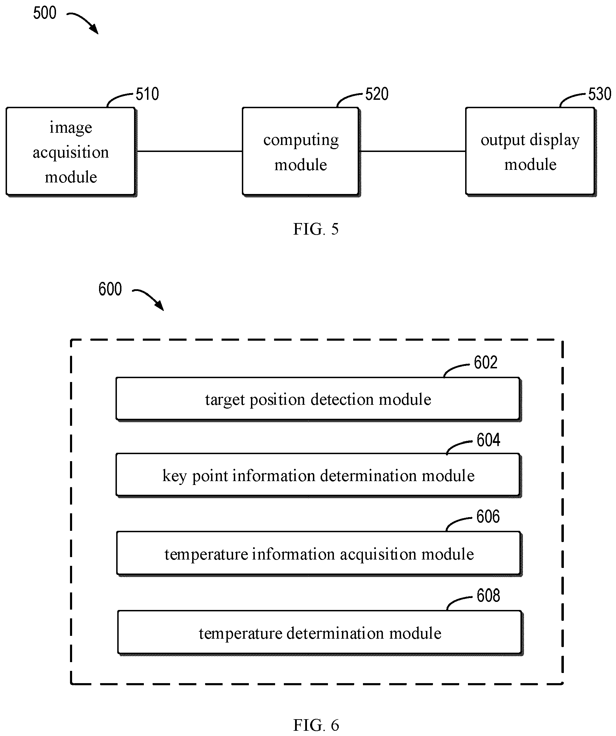

FIG. 3 is a flowchart illustrating a process 300 for measuring temperature according to an embodiment of the present disclosure. In some embodiments, a method 300 may be implemented in a computing device 120 of FIG. 1, a computing device 220 of FIG. 2, and a device illustrated in FIG. 6. A process 300 for measuring temperature according to an embodiment of the present disclosure is described with reference to FIG. 1. To convenient for understanding, the specific examples mentioned in the following description are illustrative and not intended to limit the scope of protection of the disclosure.

At 302, a computing device 120 may detect a target position of an object in an input image 110. As an example, the computing device 120 may determine a detection region for the target position in the input image 110 through a CNN 140 (such as a detection region generation model). In some embodiments, the CNN 140 may perform face region detection on the input image 110. For example, basic face features may be extracted from the input image 110 through a six-layer convolution network, and each layer of the convolution network may realize once sampling for the image. The last three layers of convolution network may be respectively preset a fixed number of different sizes of face anchor regions to perform regression of a detection region for a face, and finally the detection region for the face is determined. It may be understood that the above example is illustrative, and may use other layers of convolutional networks, and are not limited to determining the detection region for the face. In this way, the detection area of the target position in the input image 110 may be quickly recognized based on the detection area generation model, which may prepare for the subsequent temperature measurement and even face recognition.

At 304, the computing device 120 may determine key points of the target position and weight information of each key point based on a detection result of the target position. The weight information is configured to indicate a probability of each key point being covered. As an example, the computing device 120 may apply the detection result of the target position to the CNN 140 (such as a key point determination model) to determine the key points and the weight information of each key point. The CNN 140 is obtained by training based on a reference target position in a reference image, and reference key points of the reference target position and reference weight information. In some embodiments, the CNN 140 may determine the key points of the face and the weight information of each key point based on the detection result of the face. In this way, the temperature measurement may focus on positions that are not covered or affected by objects with abnormal temperature, thus improving accuracy of the temperature measurement.

FIG. 4 is a schematic diagram illustrating a process of determining key points 420 and weight information thereof based on a detection result 410 according to an embodiment of the present disclosure. As illustrated in FIG. 4, a detected object is a pedestrian, and a target potion is a facial position of the pedestrian, that is, a face. When a CNN 140, such as a key point determination model, acquires an image in which a face detection region 410 has been confirmed, the CNN 140 may determine a plurality of key points in the face detection region 410, such as a key point 420. The CNN 140 may further determine weight information of each key point. For example, since the key point 420 is covered by both a hand and a cell phone, it is determined that weight information of the key point 420 is very small. As an example, the weight information may be set to be a value between 0 and 1. The greater a probability of a key point predicted by the CNN140 being covered, the smaller a value of the weight information, which means that a temperature at the key point has no reference value.

After that, return to FIG. 3. At 306, the computing device 120 may acquire temperature information of each key point. As an example, the computing device 120 may acquire a temperature sensing image 130 for a target position. The temperature sensing image 130 may be acquired by a temperature sensing device, such as an infrared thermal imaging device. The temperature sensing device such as the infrared thermal imaging device may register with the image acquisition device described above, pixel-level alignment of imaging of the two devices is achieved. Thus, the computing device 120 may determine temperature information corresponding to a location of each key point from the temperature sensing image. In this way, temperature measurement of the recognized key point is realized, thereby preparing for the subsequent temperature calculation.

It should be understood that although the temperature information acquired at this time may be configured as the basis for calculating the temperature 150, there may still be errors due to influence of an environmental factor and other factors. Therefore, a functional relationship between a measurement temperature and an actual temperature at a location where the temperature sensing device and the image acquisition device are arranged may be created. For example, this functional relationship may be fitted by a least square method based on prior knowledge. Thus, the computing device 120 may acquire a measurement temperature of each key point, and determine an actual temperature of each key point based on the measurement temperature. Therefore, accuracy of the actual temperature determined by the computing device 120 is significantly improved.

At 308, the computing device 120 may determine a temperature of the target position at least based on the temperature information and the weight information of each key point. It may be understood that the target position described herein may be at least one of a face, eyes and hands (including fingerprints) of the object, and the object is not limited to a person. For example, after determining the temperature of the target position, the computing device 120 may compare the temperature with a temperature threshold, and alarm when the temperature is higher than the temperature threshold. Since temperatures of respective positions of a human body are different, when the face of the person is detected, a temperature threshold corresponding the face may be preset to be different from a temperature threshold corresponding to the hands of the person. In addition, when performing temperature detection on animals in a zoo or a feeding station, because temperatures of respective animals are different, different temperature thresholds may also be determined for different species of animals, thus realizing the temperature measurement and alarm of different animals.

In the above way, the present disclosure may improve the accuracy of the temperature measurement by recognizing the plurality of key points and explicitly determining the temperature at each key point and the weight information of each key point. In addition, since the disclosure may be applied to a scene of multi-pedestrian, or multi-animal, etc., without intervention of staff, time and labor cost of the temperature measurement may be reduced, and a risk of staff being infected during epidemic may be reduced.

In addition, the computing device 120 may also recognize the target position at least based on the key points and the weight information, and determine the object based on a recognition result. In some embodiments, the computing device 120 may recognize a face based on the key points and the weight information, and then determine identity information of the monitored pedestrian. In other embodiments, the computing device 120 may also determine species of monitored animals based on the key points and the weight information. Since the mechanism of weight is set, the position covered will not or rarely be used by the computing device 120 for recognition, thus reducing the possibility of false recognition of the CNN 140 in the computing device 120.

In addition, the present disclosure also provides a system 500 for measuring temperature. As illustrated in FIG. 5, the system may include an image acquisition module 510, which may include an image sensing device such as an RGB camera and a temperature sensing device such as an infrared thermal imaging device. The system 500 may further include a computing module 520 communicatively coupled with the image acquisition module 510. The computing module 520 is configured to implement each of the methods and processings described above, such as the process 300. In addition, the system 500 may include an output display module 530 configured to display a processing result of the computing module 520 to a user. For example, the output display module 530 may display a temperature of a monitored object to the user. The output display module 530 may also be configured to issue an alarm signal when the temperature of the monitored object is higher than a predetermined threshold.

In this way, non-contact temperature measurement at system-level may be realized, and the accuracy of the temperature measurement may be significantly improved under a premise of constant computing capability demand.

In some embodiments, the system 500 may be applied to a temperature measurement scene of multi-pedestrian. For example, the image acquisition module 510 in the system 500 may be applied to a subway or an entrance of a venue, to achieve real-time acquisition of images such as RGB images and infrared images of pedestrians. The computing module 520 may perform image processing such as of the process 300 on the RGB images and the infrared images to obtain the temperature information of the pedestrians. Once it is found that a temperature of a pedestrian is higher than a predetermined threshold, the output display module 530 may lock the pedestrian through a variety of alarm methods, The system may monitor the temperature information of a plurality of pedestrians passing through the entrance in real time. In this way, direct contact between security inspection and epidemic prevention personnel and suspected patients may be avoided or reduced, and the process of the temperature measurement is simple and efficient, without causing congestion artificially.

In some embodiments, the system 500 may be applied to a farm or a zoo. For example, the image acquisition module 510 in the system 500 may be applied to a best viewing angle of the farm or zoo to achieve real-time monitoring of temperature information of animals. In addition, the computing module 520 may recognize species of animals, to determine the species of animals that have measured temperature, and thus acquire a temperature threshold of such a species of animals. Once it is found that a temperature of an animal is higher than a threshold value, the output display module 530 may lock the animal through a variety of alarm methods for the convenience of staff to treat or handle the animal. In this way, direct contact between the staff and the animals that may carry germs may be avoided or reduced.

FIG. 6 is a block diagram illustrating an apparatus 600 for measuring temperature according to an embodiment of the present disclosure. As illustrated in FIG. 6, the apparatus 600 may include a target position detection module 602, configured to detect a target position of an object in an input image; a key point information determination module 604, configured to determine key points of the target position and weight information of each key point based on a detection result of the target position, wherein the weight information is configured to indicate a probability of each key point being covered; a temperature information acquisition module 606, configured to acquire temperature information of each key point; and a temperature determination module 608, configured to determine a temperature of the target position at least based on the temperature information and the weight information of each key point.

In some embodiments, the key point information determination module 604 may include: a detection result applying module, configured to determine the key points and the weight information by applying the detection result to a key point determination model, wherein the key point determination model is obtained by training based on a reference target position in a reference image and reference key points of the reference target position and reference weight information.

In some embodiments, the temperature information acquisition module 606 may include: a temperature sensing image acquisition module, configured to acquire a temperature sensing image for the target position; and a temperature information determination module, configured to determine temperature information corresponding to a location of each key point from the temperature sensing image.

In some embodiments, the temperature information acquisition module 606 may include: a measurement temperature acquisition module, configured to acquire a measurement temperature of each key point; and an actual temperature acquisition module, configured to determine an actual temperature of each key point based on the measurement temperature.

In some embodiments, the apparatus 600 may further include: a target position recognition module, configured to recognize the target position at least based on the key points and the weight information; and an object determination module, configured to determine the object based on a recognition result.

In some embodiments, the target position is at least one of a face, eyes and fingerprints of the object.

In some embodiments, the target position detection module 602 may include: a detection region determination module, configured to determine a detection region for the target position in the input image through a detection region generation model.

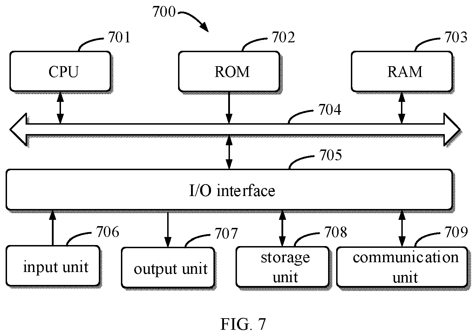

FIG. 7 is a block diagram illustrating a computing device 700 capable of implementing a plurality of embodiments of the present disclosure. The device 700 may be configured to implement a computing device 120 in FIG. 1 or a computing device 220 in FIG. 2. As illustrated in FIG. 7, the device 700 includes a central processing unit (CPU) 701, which may execute various appropriate acts and processing based on computer program instructions stored in a read-only memory (ROM) 702 or computer program instructions loaded from a storage unit 708 to a random-access memory (RAM) 703. In the RAM 703, various programs and data needed for the operation of the device 700 may be stored. The CPU 701, the ROM 702, and the RAM 703 are connected to each other through a bus 704. An input/output (I/O) interface 705 is also connected to the bus 704.

Multiple components in the device 700 are connected to the I/O interface 705, including: an input unit 706, such as a keyboard, a mouse, etc.; an output unit 707, such as various types of displays, speakers, etc.; the storage unit 708, such as a disk, a CD, etc.; and a communication unit 709, such as a network card, a modem, a wireless communication transceiver, etc.. The communication unit 709 allows the device 700 to exchange information/data with other devices via computer networks such as the Internet and/or various telecommunications networks.

The processing unit 701 executes the various methods and procedures described above, such as the method 200. For example, in some embodiments, the method 200 may be implemented as computer software programs, which are physically contained in a machine-readable medium, such as the storage unit 708. In some embodiments, some or all of the computer programs may be loaded and/or installed on the device 700 via the ROM 702 and/or the communication unit 709. The computer programs may execute one or more acts or steps of the method 200 described above when loaded to the RAM 703 and executed by the CPU 701. Alternatively, in other embodiments, the CPU 701 may be configured to execute the method 200 by any other appropriate ways (such as, by means of a firmware).

The above functions described herein may be executed at least partially by one or more hardware logic components. For example, without limitation, exemplary types of hardware logic components, including a field-programmable gate array (FPGA), an application-specific integrated circuit (ASIC), an application specific standard product (ASSP), a system on chip (SOC), a load programmable logic device (CPLD) and so on, may be used.

The program codes for implementing the method of embodiments of the present disclosure may be written in any combination of one or more program languages. These program codes may be provided for a processor or a controller of a general-purpose computer, a special-purpose computer, or other programmable data-processing devices, such that the functions/operations regulated in the flow charts and/or block charts are implemented when the program codes are executed by the processor or the controller. The program codes may be completely executed on the machine, partly executed on the machine, partly executed on the machine as a standalone package and partly executed on a remote machine or completely executed on a remote machine or a server.

In the context of the present disclosure, the machine readable medium may be a tangible medium, which may include or store the programs for use of an instruction execution system, apparatus or device or for use in conjunction with the instruction execution system, apparatus or device. The machine readable medium may be a machine readable signal medium or a machine readable storage medium. The machine readable medium may include but not limited to electronic, magnetic, optical, electromagnetic, infrared, or semiconductor systems, apparatuses or devices, or any appropriate combination of the foregoing contents. A more detailed example of the machine readable storage medium includes electrical connections based on one or more lines, a portable computer disk, a hard disk, a random access memory (RAM), a read-only memory (ROM), an erasable programmable read only memory (an EPROM or a flash memory), an optical fiber, a compact disc read-only memory (CD-ROM), an optical storage device, a magnetic storage device, or any appropriate combination of the above contents.

In addition, although respective act or step is described in a particular sequence, it should be understood that such act or step are required to be executed in the specified or sequential order as illustrated, or all illustrated acts or steps are required to be executed to achieve a desired result. Under certain environment, multitasking and parallel processing may be beneficial. In the same way, although several specific implementation details are included in the above discussion, these should not be interpreted as limitations of the scope of the present disclosure. Certain features described in the context of a single embodiment may also be in a combination manner to be implemented in a single implementation. On the contrary, the various features described in the context of a single implementation may also be implemented in multiple implementations individually or in any appropriate sub-combination.

Although language specific to structural features and/or method logic actions has been employed to describe the embodiments of the present disclosure, it should be understood that the subject matter defined in the appended claims is not necessarily limited to the specific features or acts described above. On the contrary, the specific features or acts described above are merely an exemplary form for implementing the claims.

## Claims

1. A method for measuring temperature, comprising:
detecting a target position of an object in an input image;
determining key points of the target position and weight information of each key point based on a detection result of the target position, wherein the weight information is configured to indicate a probability of each key point being covered;
acquiring temperature information of each key point; and
determining a temperature of the target position at least based on the temperature information and the weight information of each key point.

2. The method according to claim 1, wherein determining the key points and the weight information comprises:
determining the key points and the weight information by applying the detection result to a key point determination model, wherein the key point determination model is obtained by training based on a reference target position in a reference image, and reference key points of the reference target position and reference weight information.

3. The method according to claim 1, wherein acquiring the temperature information of each key point comprises:
acquiring a temperature sensing image for the target position; and
determining temperature information corresponding to a location of each key point from the temperature sensing image.

4. The method according to claim 1, wherein acquiring the temperature information of each key point comprises:
acquiring a measurement temperature of each key point; and
determining an actual temperature of each key point based on the measurement temperature.

5. The method according to claim 1, further comprising:
recognizing the target position at least based on the key points and the weight information; and
determining the object based on a recognition result.

6. The method according to claim 1, wherein the target position is at least one of a face, eyes and fingerprints of the object.

7. The method according to claim 1, wherein detecting the target position comprises:
determining a detection region for the target position in the input image through a detection region generation model.

8. An apparatus for measuring temperature, comprising:
a target position detection module, configured to detect a target position of an object in an input image;
a key point information determination module, configured to determine key points of the target position and weight information of each key point based on a detection result of the target position, wherein the weight information is configured to indicate a probability of each key point being covered;
a temperature information acquisition module, configured to acquire temperature information of each key point; and
a temperature determination module, configured to determine a temperature of the target position at least based on the temperature information and the weight information of each key point.

9. The apparatus according to claim 8, wherein the key point information determination module comprises:
a detection result applying module, configured to determine the key points and the weight information by applying the detection result to a key point determination model, wherein the key point determination model is obtained by training based on a reference target position in a reference image and reference key points of the reference target position and reference weight information.

10. The apparatus according to claim 8, wherein the temperature information acquisition module comprises:
a temperature sensing image acquisition module, configured to acquire a temperature sensing image for the target position; and
a temperature information determination module, configured to determine temperature information corresponding to a location of each key point from the temperature sensing image.

11. The apparatus according to claim 8, wherein the temperature information acquisition module comprises:
a measurement temperature acquisition module, configured to acquire a measurement temperature of each key point; and
an actual temperature acquisition module, configured to determine an actual temperature of each key point based on the measurement temperature.

12. The apparatus according to claim 8, further comprising:
a target position recognition module, configured to recognize the target position at least based on the key points and the weight information; and
an object determination module, configured to determine the object based on a recognition result.

13. The apparatus according to claim 8, wherein the target position is at least one of a face, eyes and fingerprints of the object.

14. The apparatus according to claim 8, wherein the target position detection module comprises:
a detection region determination module, configured to determine a detection region for the target position in the input image through a detection region generation model.

15. An electronic device, comprising:
one or more processors; and
a memory, configured to store one or more programs, wherein when the one or more programs are executed by the one or more processors, the one or more processors are enabled to implement the method of any one of claims 1-7.

16. A computer-readable storage medium having a computer program stored thereon, wherein the program is caused to implement the method of any one of claims 1-7 when executed by a processor.

17. A system for measuring temperature, comprising:
an image acquisition module, configured to provide an input image associated with a target position of an object;
a computing module communicatively coupled with the image acquisition module, configured to implement the method of any one of claims 1-8; and
an output display module, configured to display a processing result of the computing module.
